Europäisches Patentamt

European Patent Office

Office européen des brevets

(19)

(11) Publication number: **0 125 926**
**B1**

## (12) EUROPEAN PATENT SPECIFICATION

(45) Date of publication of patent specification: **20.07.88**

(51) Int. Cl.⁴: **B 60 P 1/16**

(21) Application number: **84303297.0**

(22) Date of filing: **16.05.84**

(54) Pneumatic control for hydraulic valve.

(30) Priority: **17.05.83 GB 8313552**

(43) Date of publication of application:
**21.11.84 Bulletin 84/47**

(45) Publication of the grant of the patent:
**20.07.88 Bulletin 88/29**

(84) Designated Contracting States:
**BE DE FR NL**

(56) References cited:
**DE-B-1 204 079**
**US-A-3 022 111**
**US-A-3 464 755**

(73) Proprietor: **Telehoist Limited**
**Manor Road**
**Cheltenham GL51 9SH (GB)**

(72) Inventor: **Clements, Colin**
**Rushcroft House Pamington**
**Tewkesbury Gloucestershire (GB)**

(74) Representative: **Duncan, Angus Henry**
**Barker, Brettell & Duncan 138 Hagley Road**
**Edgbaston Birmingham, B16 9PW (GB)**

Courier Press, Leamington Spa, England.

**Description**

The invention relates to the control of hydraulic valves, in particular hydraulic valves used in the tipper mechanisms of tipping vehicles.

It is usual for tipper mechanisms to be hydraulically powered by means of a pump driven from a "Power Take-Off" (hereinafter referred to as a "P.T.O.") of the vehicle; such mechanisms have hitherto been controlled by two separate switches, one of which controls the engagement of the P.T.O. and hence the operation of the hydraulic pump, and the other of which controls the operation of an hydraulic valve which directs hydraulic fluid to and from the hydraulic cylinder which elevates or lowers the tipping body.

A disadvantage of such previous tipping mechanisms is that by virtue of the separate nature of the P.T.O. and tipping controls it is possible to leave the P.T.O. engaged after completing the tipper operation, and then to drive a vehicle with the P.T.O. engaged, which can lead to damage to the hydraulic system.

The above-mentioned disadvantage can be overcome by the provision of a tipper control mechanism integrated with that of the P.T.O. One such tipper control mechanism is disclosed in DE-B-1204079 in which, also in accordance with the pre-characterizing part of claim 1, there is provided a mechanism for operating a relatively movable part of a vehicle such as a tipping body, comprising a reservoir for hydraulic fluid, a pump for supplying fluid from the reservoir to an hydraulic cylinder for moving the said vehicle part, an engageable and disengageable P.T.O. for coupling the pump to a source of motive power on the vehicle so that the pump is driven by means of the said power source, an hydraulic valve controlling flow of fluid to and from the hydraulic cylinder and having a first position in which fluid is supplied from the pump to the hydraulic cylinder and a second position in which fluid is prevented from flowing to or from the hydraulic cylinder, the hydraulic valve and the engagement/disengagement of the P.T.O. being controlled by a common manually-operated control means which is so arranged that the P.T.O. is engaged when the hydraulic valve is in its first position or in its second position.

The hydraulic valve of the mechanism of DE-B-1204079 also has another position which allows fluid to flow freely from the hydraulic cylinder to the reservoir under the action of an external force on the hydraulic cylinder, and when the common control means is arranged to put the hydraulic valve into this other position it also disengages the P.T.O. Such a control can be used to tip the whole load of a tipping body, but when a tipping body is required to tip only part of its load, it is necessary for the body to be lowered in a laden condition, in which case some control of the fluid flow from the hydraulic cylinder is required to ensure a safe rate of descent of the body.

In DE-B-1204079 a mechanical linkage is used to control both the hydraulic valve and the P.T.O.

However, pneumatic apparatus is often used instead to control the P.T.O. and the hydraulic valve separately in a tipper mechanism, usually a simple pneumatic cylinder for the P.T.O. and for the hydraulic valve a double-acting cylinder with a self-centering spring which permits three positions of the valve spool corresponding to the "raise", "hold" and "lower" modes of operation of the tipper mechanism. In such systems, however, there is no provision for intermediate positioning of the hydraulic valve spool to facilitate a controlled lowering of a partly laden body as described above.

In attempts to overcome this disadvantage, tipper mechanisms have been provided with a pneumatic control valve of a type known as a proportional control valve, incorporating a control lever and whose air pressure output is matched with the spring characteristics of the self-centering spring of the pneumatic cylinder on the hydraulic valve. In this way the rate of descent of the partially laden body is determined by movement of the control lever. However, hysteresis in such a system has been found to be high, which causes control of the rate of descent in this way to be inaccurate.

According to the present invention there is provided a mechanism for operating a relatively movable part of a vehicle such as a tipping body which is characterised in that the hydraulic valve is controlled by a first pneumatic cylinder, the engagement/disengagement of the P.T.O. is controlled by a second pneumatic cylinder, the two pneumatic cylinders are under the control of the manually-operated common control means which comprises a pneumatic control valve assembly, the hydraulic valve has a third position allowing restricted flow from the hydraulic cylinder to the reservoir under the action of an external force on the hydraulic cylinder, and the common control means is arranged so that the P.T.O. is engaged when the hydraulic valve is in its third position. The operating mechanism of the present invention enables a controlled descent of a partially laden tipping body.

The hydraulic valve may also have a fourth position allowing fluid to flow freely from the hydraulic cylinder to the reservoir under the action of an external force on the hydraulic cylinder, and, when the common control means is arranged to put the hydraulic valve into its fourth position, it also disengages the P.T.O.

An embodiment of the invention will now be described, by way of example only, with reference to the accompanying drawings, of which:—

Figure 1 is a block diagram of a tipper mechanism according to the invention;

Figure 2 is a longitudinal cross-sectional view of the first pneumatic cylinder and the hydraulic valve of the tipper mechanism of Figure 1;

Figure 3 is a diagrammatic and exaggerated enlarged view of part of Figure 2;

Figure 4 is a perspective view of the manually operable lever of the tipper mechanism;

Figure 5 is a vertical cross-section view of the manually operable pneumatic control valve including the lever of Figure 4;

Figure 6 is an enlarged view of part of Figure 2;

Figure 7 is a cross-section on line VII-VII of Figure 6;

Figure 8 is a longitudinal cross-sectional view of a modified hydraulic valve;

Figure 9 is a diagrammatic, enlarged view of part of Figure 8, with the hydraulic valve in the 'Hold' mode;

Figure 10 is a view similar to Figure 9, with the hydraulic valve in the 'Slow lower' mode;

Figure 11 is a view similar to Figures 9 and 10, with the hydraulic valve in the 'Fast lower' mode;

Figure 12 is a longitudinal cross-sectional view of a different means of connecting the valve element of the hydraulic valve and the piston rod of the first pneumatic cylinder;

Figure 13 is an enlarged longitudinal cross-sectional view of the adaptor of Figure 12;

Figure 14 is a cross-sectional view of the adaptor taken in line XIV-XIV of Figure 13;

Figure 15 is a plan view of the adaptor, and

Figure 16 is an enlarged view of the 'C' spring clip of Figure 12.

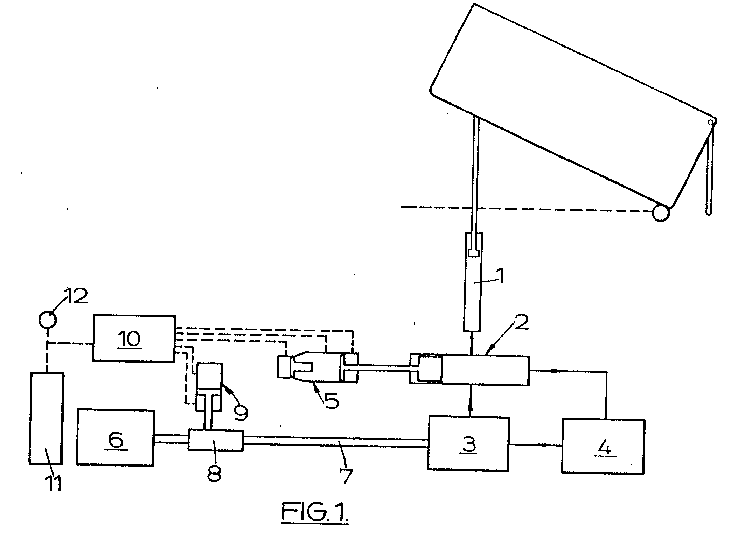

The overall operation of the tipper mechanism is best seen from Figure 1, which shows a tipper body of a tipper vehicle which is raised and lowered by means of a single-acting hydraulic cylinder 1 controlled by an hydraulic valve 2. The operation of the valve 2 in directing hydraulic fluid from a pump 3 to the hydraulic cylinder 1 or back to an hydraulic reservoir 4 is governed by the position of the spool within the valve 2 which is in turn determined by the piston of a first pneumatic cylinder 5 to which the spool is rigidly attached.

The pump 3 is driven from the engine 6 of the vehicle through a shaft 7 coupled to be the pump 3 by a disengageable P.T.O. 8. The P.T.O. 8 is operated by means of a second pneumatic cylinder 9, and the operation of both first and second pneumatic cylinders 5, 9 is governed by means of a single manually operable pneumatic control valve 10 which derives a supply of pressurised air from an air tank 11 to which is connected a pressure gauge 12.

The first and second pneumatic cylinders 5, 9 are therefore under the control of a single control valve 10 which serves both to determine the position of the spool within the hydraulic valve 2, which in turn determines the operating mode of the tipper control system, and to connect and disconnect the P.T.O. drive to the hydraulic pump 3. The two functions of the valve 10 are interdependent in a way described below.

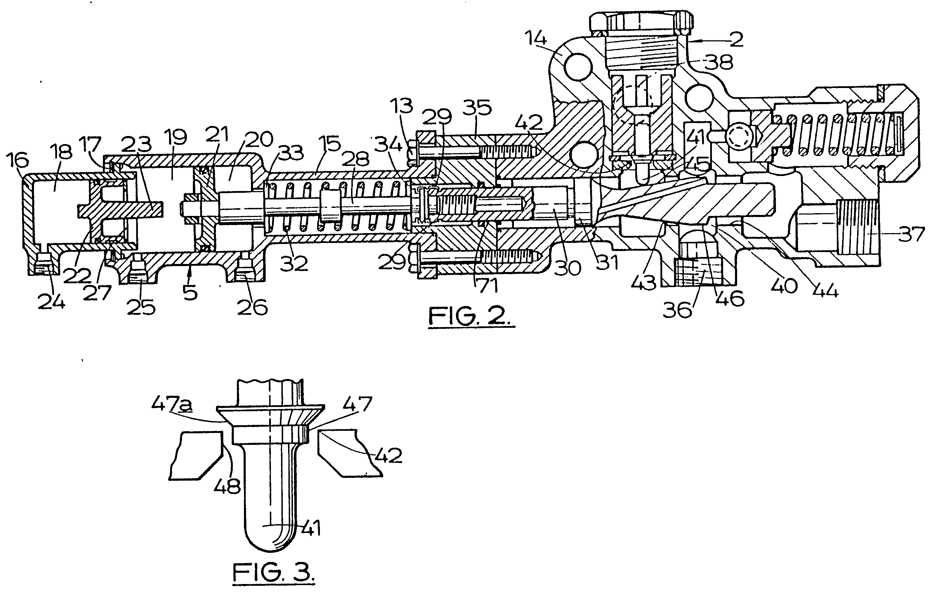

The tipper mechanism has four distinct modes of operation, best described with reference to Figures 2 and 3. The first air cylinder 5 is fixed by screws 13 to an adaptor 35 at one end of the housing 14 of the hydraulic valve 2. The first air cylinder 5 is a double-acting cylinder comprising a housing 15 connected to an auxiliary cylinder 16 by a retaining ring 17. Within the housings are defined chambers 18, 19 and 20 in which work a main piston 21 and a smaller auxiliary piston 22. The auxiliary piston 22 carries a forwardly extending abutment nose 23 which in certain modes of operation of the system described below engages and limits the travel of the main piston 21. The chambers 18, 19, 20 are supplied with compressed air or exhausted to atmosphere as appropriate via ports 24, 25 and 26 respectively, under the control of the manually operable control valve 10 (Figure 1). The forward travel of the auxiliary piston 22 is limited by a circlip 27 retained in radial recesses of the housing 16.

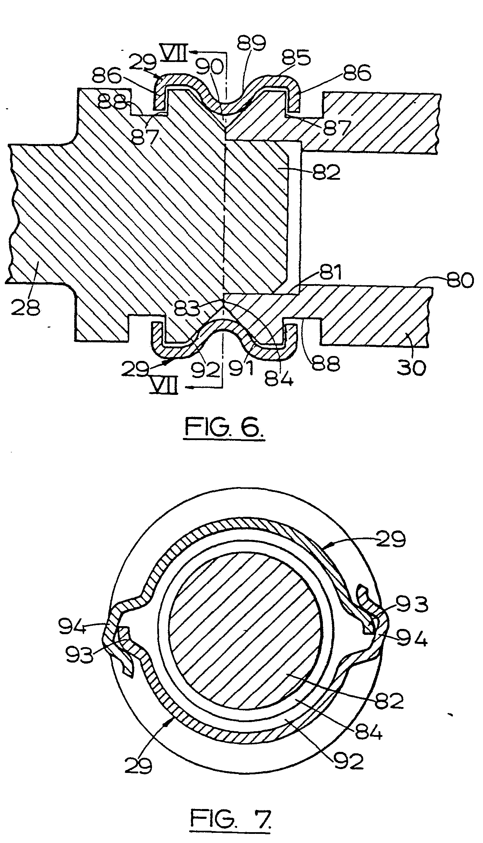

The main piston 21 is carried on one end of a piston rod 28 which at its other end is connected to the end portion of the stem 30 of the spool 31 of the hydraulic valve 2. The connection for axial movement between the piston rod 28 and the spool stem 30 is made by means of a clip arrangement 29 described in detail below with reference to Figures 6 and 7.

The main piston is held in an approximate midposition of the cylinder by a self-centering spring 32 pre-compressed between two C-washers 33, 34, one 34 of which abuts the face of the adaptor 35 by means of which the cylinder 5 is attached to the valve 2.

Turning now to the hydraulic valve 2 as shown in Figures 2 and 3, it has a fluid inlet port 36 through which fluid from the pump 3 is delivered, an exhaust port 37 by way of which fluid returns to the reservoir 4 and a delivery port 38 through which fluid flows to and from the hydraulic cylinder 1 which in this example is a single acting cylinder.

The four modes of operation of the tipper control mechanism as they relate to the first pneumatic cylinder 5 and the hydraulic valve 2 are as follows:-

(i) the "Hold" mode (as shown in Figure 2), in which the tipping body is maintained in a tipping position, is obtained by pressurising port 24 of the first pneumatic cylinder and exhausting ports 25 and 26 to atmosphere. The main piston 21 is thereby held in the position shown by the spring 32 thus positioning the hydraulic valve spool 31 as shown; fluid can thereby flow from the pump 3 through the inlet port 36 into chamber 40 and through valve body bore 44 to leave the valve by the exhaust port 37. Any fluid present in the hydraulic cylinder 1 is retained therein by poppet 41 which rests on a seat 42 and closes the port 38, the poppet 41 not being lifted in the "Hold" mode as the bore 44 is open and insufficient pressure is built up in the chamber 40.

(ii) the "Raise" mode, in which the hydraulic cylinder 1 is pressurised to raise the tipping body, is obtained by pressurising port 25 whereby the main piston 21 and the piston rod 28 are moved to the right against the force of the spring 32 until the hydraulic valve spool 31 is at the extremity of its stroke. Port 26 is exhausted to atmosphere and port 24 is pressurised. The spool 31 closes bore 44, cutting off the exhaust port 37 so pressure builds up within the hydraulic valve, opening the poppet valve 41 and flowing to the hydraulic cylinder 1 to raise the tipper body.

(iii) the "Slow lower" mode is that used when the tipping body is to be lowered whilst partially laden and will therefore always follow the "Raise" or "Hold" modes. "Slow lower" is obtained by exhausting port 25 to atmosphere and pressurising ports 24, 26. Piston 22 is moved to the right to its forward limit of travel defined by the circlip 27, and the main piston 21 moves to the left through its "Hold" position against the force of the spring 32 but its travel is limited by engaging the abutment nose 23 of piston 22. It is arranged that the effective force produced by the pressure in chamber 18 on the piston 22 exceeds the pressure in chamber 20 acting on piston 21 less the force of the spring 32 so the piston 22 will not withdraw from the circlip 27 but will form a stop for the main piston 21 at a predetermined axial position.

In this position the valve spool 31, which has moved to the left as viewed in Figure 3, lifts the tip of the poppet valve 41 only partially as it rides along the conical surface 45 of the spool 31 enabling the fluid in the hydraulic cylinder 1 to escape through the severely restricted passage so formed. The rate of descent of the tipping body is therefore predetermined by the displacement of the poppet valve at this particular position of the valve spool 31. At this point, a cylindrical surface 46 of the spool 31 is already clear of the bore 43 to allow the escape of fluid to the exhaust port 37.

(iv) the "Fast lower" mode, in which the empty tipper body is returned to its rest position, is obtained by pressurising port 26 and exhausting ports 24 and 25 to atmosphere. The main piston 21 is then free to move to the extreme left of the cylinder 5 as shown in Figure 3. The cylindrical surface 46 of the spool 31 will then lift the poppet 41 fully clear of its seating 42 and the fluid from the hydraulic cylinder 1 can escape at a much faster rate than in the "Slow lower" mode through the poppet valve 41, the bore 43 and the exhaust port 37.

Figure 3 shows the poppet valve in detail, with the poppet 41 lifted from the seating 42. A land 47 fits in a bore 48 of the seating 42, the bore being closed when the poppet 41 is in its lowermost position by a frustoconical surface 47a of the poppet. This is the position of the poppet 41 in the "Hold" mode. Figure 3 shows the poppet 41 in the position which it takes in the "slow lower" mode in which the frusto-conical surface 47a is lifted clear of the seating 42 to open a severely restricted passage between the land 47 and the bore 48. In the "Raise" and "Fast Lower" modes the land 47 is lifted completely clear of the seating 42 to leave the bore 48 unrestricted save for the body of the poppet 41.

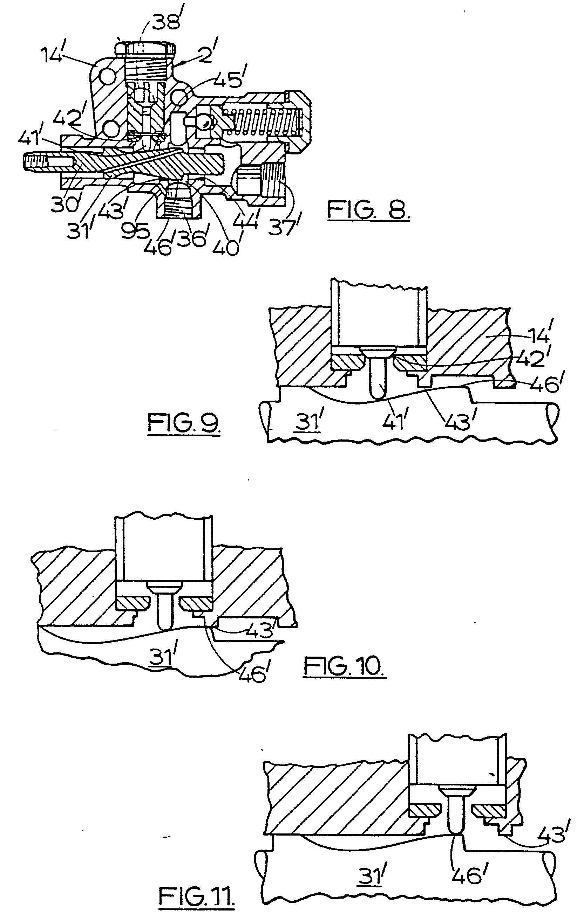

Figures 8 to 11 show a modified hydraulic valve 2', where similar parts have been given similar, primed reference numerals. The valve is shown in the 'Hold' mode in Figures 8 and 9, in the 'Slow lower' mode in Figure 10, and in the 'fast lower' mode in Figure II.

The modified valve 2' operates in the same way as the valve 2 of Figures 2 and 3 in the 'Hold', 'Raise' and 'fast lower' modes but achieves slow-lowering in a different way.

The poppet 41' of the modified valve 2' does not have a land like the land 47 of the hydraulic valve 2. The modified valve has a restricted orifice 95 connecting the chamber 40' to the inlet port 36', the orifice opening into the chamber 40' to the left, as viewed in Figure 8, of the bore 43'.

In the 'Slow lower' mode the valve spool 31' is moved to an intermediate position as described above in connection with the valve 2.

As in the previous arrangement, in the 'Slow lower' mode (see Figure 10) the spool 31' lifts the tip of the poppet valve 41' only partially as it rides along the conical surface 45' of the spool. However, in this modified version, the cylindrical surface 46' of the spool 31' closes bore 43' in the 'Slow lower' mode, so that the only path for the flow of fluid from the hydraulic cylinder is via the orifice 95, which therefore determines the rate of descent of the tipping body. This return fluid joins the incoming fluid from the hydraulic pump, and flows through the bore 44' and the exhaust port 37'.

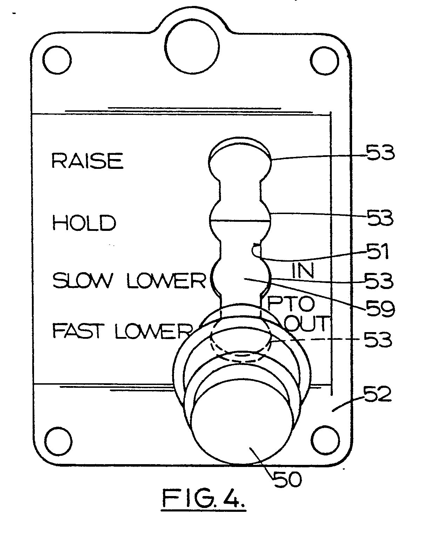

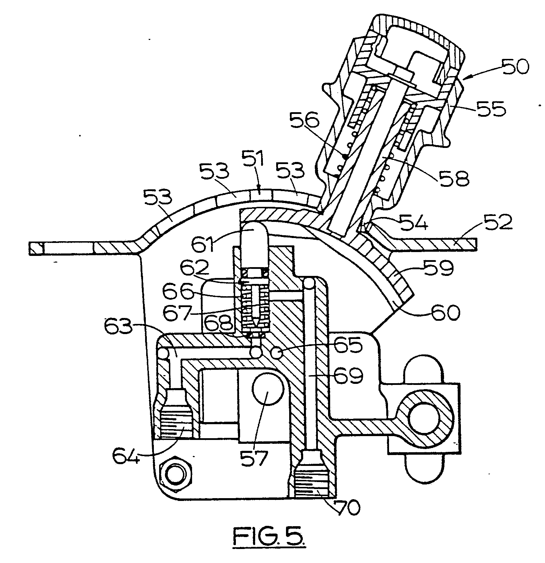

The flow of air to and from the ports 24, 25 and 26 is controlled by the manually operable pneumatic control valve 10 which is shown in Figures 4 and 5. The valve is provided with a lever shown generally at 50 which passes through a slot 51 in a fascia plate 52, the slot having four part-circular enlarged portions 53 corresponding to four positions of the lever, marked with the names of the four modes of operation of the tipper control mechanism. Those enlarged portions corresponding to the "Slow lower", "Hold" and "Raise" positions are in addition marked "PTO in" and that enlarged portion corresponding to the "Fast lower" position is in addition marked "PTO out" as shown in Figure 4, for reasons explained below.

The enlarged portions 53 of the slot 51 form particular locations for the cylindrical lower end 54 of an outer sleeve 55 of the lever 50, which must be lifted against the action of a spring 56 before the lever can be moved along the slot by pivoting the lever about its pivot axis 57 to select the mode required. A central stem 58 of the lever is upstanding from an arcuate cam plate 59 which carries six cams 60 (only two of which are shown). The cams 60 are disposed on the cam plate 59 such that at an arranged point during the arcuate travel of the cam plate, each cam 60 acts on the upper spherical end 61 of one of six identical valve members 62 (only one of which is shown in Figure 5).

Each of the six valves performs its own function and they are divided into rows of three, one row of three (one valve of one such row being shown in Figure 5) being connected to an inlet gallery 63 fed from an inlet port 64 which is in turn fed from the air tank 11, and the other row of three to an exhaust gallery 65 which is connected to an exhaust port (not shown).

Each of the six valves comprises a valve member 62 having a spherical upper end 61 maintained in contact with its cam 60 by the action of a spring 66. The lower end of the valve forms a pencil-shaped stem 67, the point of which when depressed by the cam 60 enters a rubber seat 68 to effect a leak-proof seal. When the action of the spring 66 is permitted by movement of the cam 60 to lift the valve member 62, air flows from the inlet gallery 63 into the chamber occupied by the valve to be delivered along a passage 69 to the control port 70.

The passage 69, although not shown as such in Figure 5, is also connected to a corresponding valve in the second line of three valves, so that operation of a second line valve would have the effect of allowing air in passage 69 to enter the exhaust gallery 65. The cams 60 are arranged so that at no time is the inlet and exhaust of any associated pair of valves in the two lines of three allowed to be opened at the same time.

The three control ports 70 are connected to the ports 24, 25, 26 of the first pneumatic cylinder 5 and it is by arranging the cams 60 in the appropriate way on the cam plate 59 that the correct sequence of connections to the ports 24, 25 and 26 of the first pneumatic cylinder takes place to select the desired operational mode.

Whilst "Raise" "Hold" or "Slow lower" are engaged, hydraulic fluid is required to be pumped to the hydraulic valve, whereas the "Fast lower" position requires no pumping to take place. The pneumatic signal for "PTO IN" i.e. the signal to activate the second pneumatic cylinder 9, is therefore derived from the control port 70 to which port 24 of the first pneumatic cylinder 5 is connected (port 24 being pressurised in "Raise" "Hold" and "Slow lower" modes), whereas in the "Fast lower" mode this port is exhausted to atmosphere, thereby automatically disengaging the PTO. As "Fast lower" is likely to be the last mode engaged for any tipping operation (a "Slow lower" operation will normally be finished by a "Fast lower" over the last part of the descent of the tipping body), the likelihood of the operator driving the vehicle with the PTO engaged and thereby damaging the hydraulic system is reduced.

There may be a pressure switch (not shown) in the valve 10, connected to the passage that leads to one side of the cylinder 9 and controlling a warning light on the control panel of the vehicle so that it is illuminated as long as the PTO is engaged.

Figures 6 and 7 show in detail the connection for transmission of axial movement between the piston rod 28 of the first pneumatic cylinder 5 and the stem 30 of the spool 31 of the hydraulic valve 2 of Figures 2 and 3.

Figure 6 shows the stem 30 to be at least partially hollow, having an axial bore 80 with a countersunk portion 81 at its open end into which is fitted a spigot 82 on the end of the piston rod 28. A shoulder 83 on the stem 30 engages a similar shoulder 84 on the piston rod 28.

The rod 28 and the stem 30 are maintained in axial engagement by a channel-section hoop in the form of two substantially semi-circular identical clips 29. The cross-section is in fact shaped to conform to the shape of the connection, being in the example shown in Figure 6 substantially M-shaped. Each clip consists of a cylindrical body portion 85 from which extend two radial flanges 86. In use, the flanges 86 engage faces 87 of the rod 28 and the stem 30 which form axially outwardly-facing surfaces of circumferentially disposed radially extending grooves 88 of the rod 28 and the stem 30. The cylindrical portions 85 of the clips 29 are formed with a radially inwardly extending rib 89 which in use lies in a Vee-shaped hollow 90 defined by oppositely inclined faces 91, 92 of the end portion of the stem 30 and the rod 28 respectively.

The clips 29 are each formed from spring steel, at one extremity with a radially outwardly directed step 93 and adjacent the other extremity with a radially outwardly directed indentation 94. To assemble the connection between the rod 28 and the stem 30 the clips 29 are placed around the rod and stem with differently-formed end portions adjacent. Pressure is then applied with pliers or similar tool to resiliently engage the step 93 of each clip 29 with the indentation 94 of the other as shown in Figure 7. When the rod 28 and the stem 30 are to be separated the clips 29 can be prised apart with a screwdriver or similar tool.

It will be noted that the forward end of the piston rod 28 of the pneumatic cylinder is positively located in the stem of the spool 31, which stem slides in a bearing 71 in the adaptor 35, so no separate sliding bearing is necessary in the pneumatic cylinder.

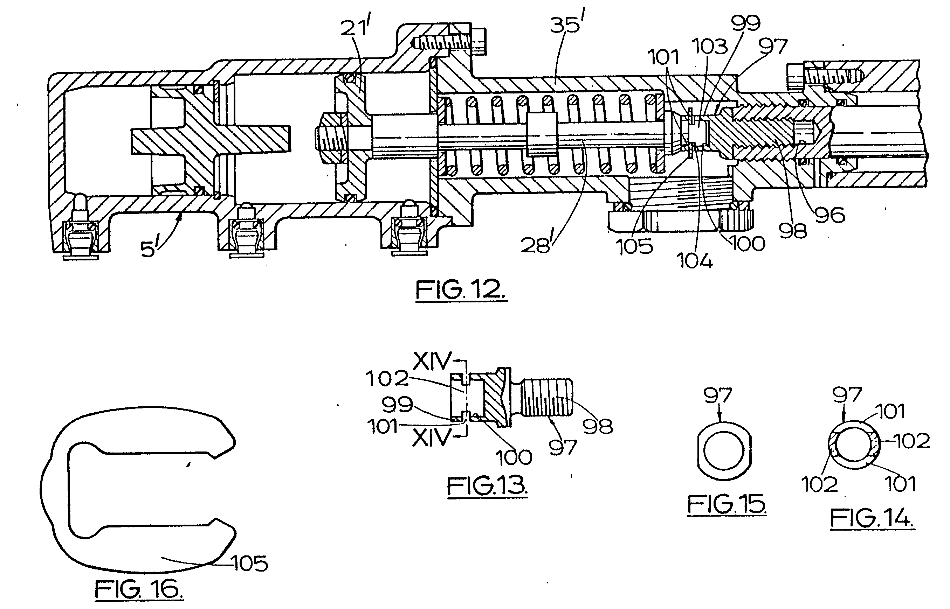

Figure 12 shows a different arrangement for connecting the piston rod of the first pneumatic cylinder to the valve spool of the hydraulic valve. The stem of the valve spool has a screw-threaded axial bore 96. An adaptor 97, shown in detail in Figures 13, 14 and 15, has an axial spigot 98 at one of its ends which is screwed into the bore 96 in the valve spool stem. At its other end the adaptor 97 has a generally tubular portion 99 defining an axial bore 100. The tubular portion has two diameterically opposed arcuate slots 101 having two arcuate connecting portions 102.

The piston rod 28' of the first pneumatic cylinder 5' has an axial spigot 103 at one end, having a circumferential recess 104. The spigot 103 fits into the bore 100 of the adaptor 97. A C-spring clip 105, shown in detail in Figure 16, grips the arcuate portions 102 of the adaptor 97, and fits into the recess 104 to retain the spigot 103 in the bore.

As before, no separate sliding bearing is necessary in the pneumatic cylinder.

## Claims

1. A mechanism for operating a relatively movable part of a vehicle such as a tipping body, comprising a reservoir (4) for hydraulic fluid, a pump (3) for supplying fluid from the reservoir (4) to an hydraulic cylinder (1) for moving the said vehicle part, an engageable and disengageable power take-off (P.T.O.) (8) for coupling the pump (3) to a source (6) of motive power on the vehicle so that the pump (3) is driven by means of the said power source (6), an hydraulic valve (2) controlling flow of fluid to and from the hydraulic cylinder (1) and having a first position in which fluid is supplied from the pump (3) to the hydraulic cylinder (1) and a second position in which fluid is prevented from flowing to or from the hydraulic cylinder (1), the hydraulic valve (2) and the engagement/disengagement of the P.T.O. (8) being controlled by a common manually-operated control means (10) which is so arranged that the P.T.O. (8) is engaged when the hydraulic valve (2) is in its first or second position, characterised in that the hydraulic valve (2) is controlled by a first pneumatic cylinder (5), the engagement/disengagement of the P.T.O. (8) is controlled by a second pneumatic cylinder (9), the two pneumatic cylinders (5 and 9) are under the control of the manually-operated common control means which comprises a pneumatic control valve assembly (10), the hydraulic valve (2) has a third position allowing restricted flow from the hydraulic cylinder (1) to the reservoir (4) under the action of an external force on the hydraulic cylinder (1), and the pneumatic control valve assembly (10) is arranged so that the P.T.O. (8) is engaged when the hydraulic valve (2) is in its third position.

2. A mechanism according to Claim 1 characterised in that the hydraulic valve (2) has a fourth position allowing fluid to flow freely from the hydraulic cylinder (1) to the reservoir (4) under the action of an external force on the hydraulic cylinder (1), and in that when the pneumatic control valve assembly (10) is arranged to put the hydraulic valve (2) into its fourth position, it also disengages the P.T.O. (8).

3. A mechanism according to Claim 1, characterised in that the pneumatic control valve assembly (10) can be used to select a first operating mode of the hydraulic valve (2) in which hydraulic fluid can flow into the hydraulic cylinder (1) to effect movement of the said vehicle part in one direction, a second operating mode of the hydraulic valve (2) in which the hydraulic cylinder (1) is isolated and no fluid flows into or out of the hydraulic cylinder (1), thereby effecting a holding of the said vehicle part in a given position, a third operating mode of the hydraulic valve (2) in which fluid can only escape from the hydraulic cylinder (1) via a restricted passage within the hydraulic valve (2), resulting in a controlled movement of the said vehicle part in a different direction and a fourth operating mode of the hydraulic valve (2) in which a passage is opened within the hydraulic valve (2) by way of which fluid can escape from the hydraulic cylinder (1) to effect movement of the said vehicle part in the said different direction, and in which the pneumatic control valve assembly (10) is so arranged that when the first, second or third operating mode of the hydraulic valve (2) is selected the second pneumatic cylinder (9) is activated so as to engage the P.T.O. (8) and when the fourth operating mode is selected the second pneumatic cylinder (9) is deactivated, so that the P.T.O. (8) is disengaged.

4. A mechanism according to Claim 1 or Claim 3, characterised in that the first pneumatic cylinder (5) has an associated first piston (2) operatively connected to a valve element (31) within the hydraulic valve (2) so that relative movement between the first piston (21) and the first pneumatic cylinder (5) produces movement of the valve element (31).

5. A mechanism according to Claim 3, characterised in that the first pneumatic cylinder (5) houses first and second movable walls (21 and 22), the position of the first movable wall (21) relative to the first pneumatic cylinder (5) determining the mode of operation of the hydraulic valve (2), the movable walls defining first, second and third chambers within the first pneumatic cylinder, the second chamber (19) being defined between the first and second movable walls (21 and 22), and the first and third chambers (20 and 18) being arranged at opposite ends of the second chamber (19), adjacent the first and second movable walls (21 and 22) respectively, the first pneumatic cylinder (5) being arranged so as to have a first operating mode in which the second and third chambers (19 and 18) are supplied with pneumatic fluid and the first chamber (20) is exhausted to atmosphere, so that the first movable wall (21) is urged by the fluid pressure in a first direction away from the second movable wall (22), to a first extreme position, a second operating mode in which the third chamber (18) is supplied with pneumatic fluid, and the fluid pressures within the first and second chambers (20 and 19) are equalised, travel-limiting means (27) limiting movement of the second movable wall (22) in the first direction, so that the first movable wall (21) is held in a first intermediate position, a third operating mode in which the first and third chambers (20 and 18) are pressurised and the second chamber (19) is exhausted, so that the first movable wall (21) is urged in the second direction and the second movable wall (22) is urged in the opposite, first direction by the fluid pressure, the second movable wall (22) acting as a stop for the first movable wall (21) and, holding the first movable wall (21) in a second intermediate position, and a fourth operating mode in which the first chamber (20) is pressurised and the second and third chambers (19 and 18) are exhausted, so that the first movable wall (21) is urged by the fluid pressure in a second direction opposite to the said first direction to a second extreme position, the first, second, third and fourth operating modes of the first pneumatic cylinder (5) corresponding respectively to the first, second, third and fourth operating modes of the hydraulic valve (2), the pneumatic fluid being supplied to or exhausted from the chambers (20, 19 and 18) as appropriate under the control of the pneumatic control valve assembly (10) via a first port (26) in the first chamber (20), a second port (25) in the second chamber (19) and a third port (24) in the third chamber (18), the first, second and third ports (26, 25, 24) being connected to first, second and third control ports (70) respectively in the pneumatic control valve assembly (10), the third control port also being connected to the second pneumatic cylinder (9) so that when any of the first, second or third operating modes is selected and pneumatic fluid is supplied to the third chamber (18) via the third control port, pneumatic fluid is also supplied to the second pneumatic cylinder (9) so as to engage the P.T.O. (8) but when the fourth operating mode is selected and the third chamber (18) is exhausted, the second pneumatic cylinder (9) is also exhausted, causing disengagement of the P.T.O. (8)

6. A mechanism according to Claim 5, characterised in that the pneumatic control valve assembly (10) is provided with a manually operable lever (50) extending from a cam plate (59) carrying six cams (60), the cams being disposed on the cam plate such that during the travel of the cam plate each cam acts on a respective one of six valve members (62) having respective valve seatings (68), the valve members (62) comprising a first valve member controlling supply of pneumatic fluid to the said first control port, a second valve member controlling supply of pneumatic fluid to the said second control port, a third valve member controlling supply of pneumatic fluid to the said third control port, a fourth valve member controlling exhaustion of pneumatic fluid from the first control port, a fifth valve member controlling exhaustion of pneumatic fluid from the second control port and a sixth valve member controlling exhaustion of pneumatic fluid from the third control port, biassing means (66) urging each valve member (62) against its respective cam (60) in a direction tending to displace the valve member from its seating (68), and the cams (60) being arranged on the cam plate (59) such that according to the operating mode selected using the manually operable lever (50), the valve members (62) are held away from their associated seatings (68) under the action of the biassing means (66) or held against their seatings (68) by means of the cams (60) as appropriate, to achieve the required system of connections to the first, second and third control ports.

7. A mechanism according to Claim 5 or Claim 6, characterised in that the first movable wall comprises a first piston (21) operatively connected to a valve element (31) within the hydraulic valve (2) so that relative movement between the first piston (21) and the first pneumatic cylinder (5) produces movement of the valve element (31), the second movable wall comprising a second piston (22).

8. A mechanism according to Claim 3, or Claim 4 and Claim 3, or any of Claims 5 to 7, characterised in that the hydraulic valve has a housing (14) with a supply passage (36) to receive pressurised fluid from the pump (3), a service passage (38) connected to the hydraulic cylinder (1) and an exhaust passage (37) communicating with the reservoir (4), a or the valve element (31) of the hydraulic valve having a generally conical surface and the hydraulic valve also comprising a poppet (41) co-operative with a seating (42) at the entrance to the service passage (38) to control the flow of hydraulic fluid to and from the service passage (38) via a bore (48) in the seating (42), the poppet (41) having a generally cylindrical land (47) with a generally frusto-conical portion (47a) adjacent the land, the arrangement being such that when the second operating mode of the hydraulic valve (2) is selected the valve element is arranged so that the supply passage (36) is in communication with the exhaust passage (37) and the poppet (41) rests in a position in which the land (47) lies within the bore (48) of the seating (42), the adjacent frusto-conical portion (47a) abuts the seating to close the seating bore (48), thereby closing off the service passage (38) so that the hydraulic cylinder (1) is isolated, when the first operating mode of the hydraulic valve (2) is selected the valve element (31) cuts off communication between the supply passage (36) and the exhaust passage (37), so that pressure builds up within the hydraulic valve, pushing the poppet (41) away from its seating (42), when the third operating mode of the hydraulic valve is selected movement of the valve element (31) causes the tip of the poppet (41) to ride along the generally conical surface of the valve element (31) to a position in which the generally frusto-conical portion (47a) of the poppet (41) is clear of the seating (42) but the land (47) lies within the seating bore (48), providing the said restricted passage between the land (47) and the seating bore (48), the valve element (31) being arranged so as to allow the escape of fluid to the exhaust passage (37), and when the fourth operating mode of the hydraulic valve is selected movement of the valve element (31) causes the tip of the poppet (41) to ride radially further outwards along the generally conical surface of the valve element (31) to a position in which the land (47) on the poppet (41) is completely clear of the seating (48), the valve element (31) again being arranged so as to allow the escape of fluid to the exhaust passage (37).

9. A mechanism according to Claim 3, or Claim 4 and Claim 3, or any of Claims 5 to 7, characterised in that the hydraulic valve (2') has a housing (14') with a supply passage (36') to receive pressurised fluid from the pump, a service passage (38') connected to the hydraulic cylinder and an exhaust passage (37') communicating with the reservoir, the supply passage (36') being connected to a valve chamber (40') within the housing by means of a first bore in the housing and being connected to the exhaust passage (37') by means of second bore (44') in the housing, the hydraulic valve incorporating a poppet valve (41') arranged between the valve chamber (40') and the service passage (38') to control the flow of hydraulic fluid to and from the service passage (38'), the said restricted passage (95) being formed in the housing and connecting the valve chamber (40') to the supply passage (36'), the arrangement being such that when the second operating mode of the hydraulic valve is selected a or the valve element (31') of the hydraulic valve allows hydraulic fluid to flow from the supply passage (36') via the second bore (44') to the exhaust passage (37'), and the poppet valve (41) is closed so that the hydraulic cylinder is isolated, when the first operating mode of the hydraulic valve (2') is selected the valve element (31') allows fluid to flow from the supply passage (36') to the valve chamber (40') via the first bore (43') and closes the second bore (44'), cutting off communication between the supply passage (36') and the exhaust passage (37'), so that pressure builds up within the valve chamber (40'), opening the poppet valve (41'), when the fourth operating mode of the hydraulic valve is selected the valve element (31') engages the poppet (41') of the poppet valve so as to hold the poppet valve open and allows hydraulic fluid to escape from the valve chamber (40') via the first bore (43'), the supply passage (36') and the second bore (44') to the exhaust passage, and when the third operating mode of the hydraulic valve is selected the valve element (31') engages the poppet (41') so as to hold the poppet valve open and closes the first bore (43'), so that hydraulic fluid can only escape from the valve chamber (40') to the supply passage (36') via the restricted passage (95), the valve element (31') allowing fluid to flow from the supply passage (36') to the exhaust passage (37') via the second bore (44').

10. A mechanism according to Claim 4 or 7, or Claim 8 or 9 and Claim 4 or 7, characterised in that the first piston (21) is carried at one end of a piston rod which at its other end is connected to the valve element (31) for transmission of movement between the piston (21) and the valve element (31), the first pneumatic cylinder (5) being attached to the hydraulic valve (2) by means of an attachment casing (35), and the valve element (31) sliding in a bearing (71) in the attachment casing (35).

**Patentansprüche**

1. Mechanismus zum Betätigen eines relativ bewegbaren Teils eines Fahrzeugs, beispielsweise eines Kippaufbaus, mit einem Tank (4) für ein Hydraulikfluid, einer Pumpe (3) zum Zuführen des Fluids von dem Tank (4) zu einem Hydraulikzylinder zur Bewegung des Fahrzeugteils, einem ein- und auskoppelbaren Zapfwellenantrieb (8) zum Verbinden der Pumpe (3) mit einer Antriebskraftquelle (6) am Fahrzeug, so daß die Pumpe (3) mit Hilfe der Kraftquelle (6) angetrieben wird, mit einem Hydraulikventil (2), das den Fluidfluß zum Hydraulikzylinder (1) und von diesem weg steuert und eine erste Stellung, in der das Fluid von der Pumpe (3) dem Hydraulikzylinder (1) zugeführt wird, und eine zweite Stellung aufweist, in der das Fluid daran gehindert wird, zum Hydraulikzylinder (1) oder von diesem weg zu fließen, wobei das Hydraulikventil (2) und das Ein- und Auskuppeln des Zapfwellenantriebs (8) durch eine handbetätigte, gemeinsame Steuereinrichtung (10) gesteuert wird, die so angeordnet ist, daß der Zapfwellenantrieb (8) eingekuppelt ist, wenn das Hydraulikventil (2) sich in seiner ersten oder zweiten Stellung befindet, dadurch gekennzeichnet, daß das Hydraulikventil (2) durch einen ersten Druckluftzylinder (5) und das Ein bzw. Auskuppeln des Zapfwellenantriebs (8) durch einen zweiten Druckluftzylinder (9) steuerbar ist, daß die zwei Druckluftzylinder (5, 9) durch die handbetätigte, gemeinsame Steuereinrichtung steuerbar sind, die eine Druckluft-Steuerventilanordnung (10) enthält, daß das Hydraulikventil (2) eine dritte Stellung aufweist, die einen begrenzten Fluß vom Hydraulikzylinder (1) zum Tank (4) unter Einwirkung einer äußeren Kraft auf den Hydraulikzylinder (1) ermöglicht, und daß die Druckluft-Steuerventilanordnung (10) so angeordnet ist, daß der Zapfwellenantrieb (8) eingekuppelt ist, wenn das Hydraulikventil (2) sich in seiner dritten Stellung befindet.

2. Mechanismus nach Anspruch 1, dadurch gekennzeichnet, daß das Hydraulikventil (2) eine vierte Stellung aufweist, in der das Fluid unter Einwirkung einer äußeren Kraft auf den Hydraulikzylinder (4) frei vom Hydraulikzylinder (1) zum Tank (4) fließen kann, und daß die Druckluft-Steuerventilanordnung (10), wenn sie so eingestellt ist, daß das Hydraulikventil (2) in seine vierte Stellung gebracht wird, ebenfalls den Zapfwellenantrieb (8) auskuppelt.

3. Mechanismus nach Anspruch 1, dadurch gekennzeichnet, daß die Druckluft-Steuerventilanordnung (10) benutzbar ist zur Auswahl einer ersten Arbeitsweise des Hydraulikventils (2), bei der Hydraulikfluid in den Hydraulikzylinder (1) fließen kann, um eine Bewegung des Fahrzeugteils in eine bestimmte Richtung zu bewirken, einer zweiten Arbeitsweise des Hydraulikventils (2), bei der der Hydraulikzylinder (1) abgesperrt ist und kein Fluid in den Hydraulikzylinder (1) hinein oder aus ihm herausfließt, wodurch das Halten des Fahrzeugteils in einer gegebenen Stellung bewirkt wird, einer dritten Arbeitsweise des Hydraulikventils (2), bei der Fluid nur über einen begrenzten Durchlaß innerhalb des Hydraulikventils (2) aus dem Hydraulikzylinder (1) entweichen kann, wodurch eine gesteuerte Bewegung des Fahrzeugteils in einer anderen Richtung hervorgerufen wird, und einer vierten Arbeitsweise des Hydraulikventils (2), bei der ein Durchlaß innerhalb des Hydraulikventils (2) geöffnet ist, durch den Fluid aus dem Hydraulikzylinder (1) entweichen kann, um die Bewegung des Fahrzeugteils in die genannte andere Richtung zu verursachen, und bei der die Druckluft-Steuerventilanordnung (10) so eingerichtet ist, daß der zweite Druckluftzylinder (9) bei Auswahl der ersten, zweiten oder dritten Arbeitsweise des Hydraulikventils (2) so aktiviert wird, daß der Zapfwellenantrieb (8) eingekuppelt ist, und daß bei Auswahl der vierten Arbeitsweise der zweite Druckluftzylinder (9) deaktiviert wird, so daß der Zapfwellenantrieb (8) ausgekuppelt ist.

4. Mechanismus nach Anspruch 1 oder 3, dadurch gekennzeichnet, daß der erste Druckluftzylinder (5) einen zugeordneten ersten Kolben (21) aufweist, der betriebsfähig mit einem Ventilelement (31) innerhalb des Hydraulikventils (2) verbunden ist, so daß die Relativbewegung zwischen dem ersten Kolben (21) und dem ersten Druckluftzylinder (5) die Bewegung des Ventilelementes (31) erzeugt.

5. Mechanismus nach Anspruch 3, dadurch gekennzeichnet, daß der erste Druckluftzylinder (5) erste und zweite bewegbare Wände (21, 22) aufweist, wobei die Stellung der ersten bewegbaren Wand (21) relativ zum ersten Druckluftzylinder (5) die Arbeitsweise des Hydraulikventils (2) bestimmt, wobei die bewegbaren Wände erste, zweite und dritte Kammern innerhalb des ersten Druckluftzylinders begrenzen, wobei die zweite Kammer (19) durch die erste und die zweite bewegbare Wand (21, 22) begrenzt ist, und die erste und dritte Kammer (20, 18) an gegenüberliegenden Enden der zweiten Kammer (19) an die erste bzw. zweite bewegbare Wand (21, 22) angrenzend angeordnet sind, wobei der erste Druckluftzylinder (5) so ausgeführt ist, daß er eine erste Arbeitsweise definiert, bei der die zweite und dritte Kammer (19, 18) mit pneumatischem Fluid beaufschlagt sind und die erste Kammer (20) zur Atmosphäre entlüftet ist, so daß die erste bewegbare Wand (21) durch den Fluiddruck in eine erste Richtung von der zweiten bewegbaren Wand (22) weg zu einer ersten Extremstellung gedrückt wird, eine zweite Arbeitsweise definiert, bei der die dritte Kammer (18) mit pneumatischem Fluid beaufschlagt ist, wobei die Fluiddrücke innerhalb der ersten und zweiten Kammern (20, 19) ausgeglichen sind, wobei Bewegungsbegrenzungseinrichtungen (27) die Bewegung der zweiten bewegbaren Wand (22) in der ersten Richtung begrenzen, so daß die erste bewegbare Wand (21) in einer ersten Zwischenstellung gehalten wird, eine dritte Arbeitsweise definiert, bei der die erste und die dritte Kammer (20, 18) unter Druck gesetzt und die zweite Kammer (19) entlüftet sind, so daß die erste bewegbare Wand (21) durch den Fluiddruck in die zweite Richtung und die zweite bewegbare Wand (22) in die entgegengesetzte, erste Richtung gedrückt werden, wobei die zweite bewegbare Wand (22) als Anschlag für die erste bewegbare Wand (21) dient, so daß die erste bewegbare Wand (21) in einer zweiten Zwischenstellung gehalten wird, und eine vierte Arbeitsweise definiert, bei der die erste Kammer (20) unter Druck gesetzt und die zweite und dritte Kammer (19, 18) entlüftet sind, so daß die erste bewegbare Wand (21) durch den Fluiddruck in einer zweiten Richtung, entgegengesetzt zu der ersten Richtung, zu einer zweiten Extremstellung gedrückt wird, wobei die erste, zweite, dritte und vierte Arbeitsweise des ersten Druckluftzylinders (5) jeweils der ersten, zweiten, dritten und vierten Arbeitsweise des Hydraulikventils (2) entsprechen, wobei das pneumatische Fluid in angemessener Weise unter der Steuerung der Druckluft-Steuerventilanordnung (10) über eine erste Öffnung (26) in der ersten Kammer (20), eine zweite Öffnung (25) in der zweiten Kammer (19) und eine dritte Öffnung (24) in der dritten Kammer (18) den Kammern (20, 19, 18) zugeführt wird, oder aus diesen entleert wird, wobei die erste, zweite und dritte Öffnung (26, 25, 24) jeweils mit der ersten, zweiten und dritten Steueröffnung (70) in der Druckluft Steuerventilanordnung (10) verbunden sind, wobei die dritte Steueröffnung auch mit dem zweiten Druckluftzylinder (9) verbunden ist, so daß, wenn eine der ersten, zweiten oder dritten Arbeitsweise ausgewählt ist und pneumatisches Fluid der dritten Kammer (18) über die dritte Steueröffnung zugeführt wird, pneumatisches Fluid ebenso dem zweiten Druckluftzylinder (9) zugeführt wird, so daß der Zapfwellenantrieb (8) eingekuppelt ist, daß aber, wenn die vierte Arbeitsweise ausgewählt und die dritte Kammer (18) entlüftet ist, der zweite Druckluftzylinder (9) ebenfalls entlüftet wird, wodurch der Zapfwellenantrieb (8) ausgekuppelt ist.

6. Mechanismus nach Anspruch 5, dadurch gekenzeichnet, daß die Druckluft-Steuerventilanordnung (10) mit einem von Hand zu betätigenden Hebel (50) versehen ist, der sich von einer Nockenscheibe (59) mit sechs Nocken (60) erstreckt, wobei die Nocken auf der Nockenscheibe derart angeordnet sind, daß während der Bewegung der Nockenscheibe jeder Nocken auf jeweils einem von sechs Ventilelementen (62), die entsprechende Ventilsitze (68) aufweisen, einwirkt, wobei die Ventilelemente (62) aus einem ersten Ventilelement, das die Zufuhr des pneumatischen Fluids zur ersten Steueröffnung steuert, einem zweiten Ventilelement, das die Zufuhr des pneumatischen Fluids zur zweiten Steueröffnung steuert, einem dritten Ventilelement, das die Zufuhr des pneumatischen Fluids zur dritten Steueröffnung steuert, einem vierten Ventilelement, das die Entlüftung des pneumatischen Fluids aus der ersten Steueröffnung steuert, einem fünften Ventilelement, das die Entlüftung des pneumatischen Fluids aus der zweiten Steueröffnung steuert, und einem sechsten Ventilelement bestehen, das die Entlüftung des pneumatischen Fluids aus der dritten Steueröffung steuert, wobei Vorspanneinrichtungen (66) jedes Ventilelement (62) gegen seinen jeweiligen Nocken (60) in eine Richtung drükken und das Ventilelement von seinem Sitz (68) abheben möchte, und wobei die Nocken (60) so auf der Nockenscheibe (59) angeordnet sind, daß je nach ausgewählter Arbeitsweise unter Benutzung des Handhebels (50) die Ventilelemente (62) unter der Wirkung der Vorspanneinrichtungen (66) von ihren zugehörigen Sitzen (68) weggehalten werden oder mit Hilfe der Nocken (60) gegen ihre Sitze (68) gedrückt werden, um das gewünschte System von Verbindungen mit der ersten, zweiten und dritten Steueröffnung zu erreichen.

7. Mechanismus nach Anspruch 5 oder 6, dadurch gekennzeichnet, daß die erste bewegbare Wand einen ersten Kolben (21) aufweist, der wirksam mit einem Ventilelement (31) innerhalb des Hydraulikventils (2) verbunden ist, so daß eine Relativbewegung zwischen dem ersten Kolben (21) und dem ersten Druckluftzylinder (5) eine Bewegung des Ventilelements (31) hervorruft, wobei die zweite bewegbare Wand einen zweiten Kolben (22) umfaßt.

8. Mechanismus nach einem der Ansprüche 3 oder 4 und 3, oder einem der Ansprüche 5 bis 7, dadurch gekennzeichnet, daß das Hydraulikventil ein Gehäuse (14) aufweist mit einer Zulauföffnung (36) zur Aufnahme von Druckfluid aus der Pumpe (3), einer Betriebsöffnung (38), die mit dem Hydraulikzylinder (1) verbunden ist, und mit einer mit dem Tank (4) in Verbindung stehenden Ausströmöffnung (37) und mit einem oder dem Ventilelement (31) des Hydraulikventils mit einer im allgemeinen konischen Fläche, wobei das Hydraulikventil auch einen Ventilkegel (41) enthält, der mit einem Ventilsitz (42) am Eingang der Betriebsöffnung (38) zusammenwirkt, um den Fluß des Hydraulikfluids zu und von der Betriebsöffnung (38) über eine Bohrung (48) im Ventilsitz (42) zu steuern, wobei der Ventilkegel (41) einen im wesentlichen zylindrischen Steg (47) mit einem an den Steg (47) angrenzenden, im wesentlichen kegelstumpfförmigen Bereich (47a) aufweist, wobei die Anordung so ausgebildet ist, daß bei Auswahl der zweiten Arbeitsweise des Hydraulikventils (2) das Ventilelement so eingestellt ist, daß die Zulauföffnung (36) mit der Ausströmöffnung (37) in Verbindung steht und der Ventilkegel (41) in einer Stellung verbleibt, in der der Steg (47) innerhalb der Bohrung (48) des Ventilsitzes (42) liegt und der benachbarte kegelstumpfförmige Bereich (47a) an dem Ventilsitz (42) anliegt, um die Ventilsitzbohrung (48) zu verschließen, wodurch die Betriebsöffnung (48) geschlossen ist, so daß der Hydraulikzylinder (1) abgesperrt ist, daß bei Auswahl der ersten Arbeitsweise des Hydraulikventils (2) das Ventilelement (31) die Verbindung zwischen der Zulauföffnung (36) und der Aurströmöffung (37) unterbricht, so daß sich in dem Hydraulikventil Druck aufbaut, der den Ventilkegel (41) von seinem Ventilsitz (42) wegdrückt, daß bei Auswahl der dritten Arbeitsweise des Hydraulikventils die Bewegung des Ventilelementes (31) die Spitze des Ventilkegels (41) entlang der im wesentlichen konischen Fläche des Ventilelementes (31) in eine Stellung rutschen läßt, in der der im wesentlichen kegelstumpfförmige Bereich (47a) des Ventilkegels (41) von dem Ventilsitz (42) abgehoben ist, aber der Steg (47) in der Ventilsitzbohrung (48) liegt, was den erwähnten begrenzten Durchlaß zwischen dem Steg (47) und der Ventilsitzbohrung (48) ergibt, wobei das Ventilelement (31) so eingestellt ist, daß das Fluid zu der Ausströmöffnung (37) fließen kann, und daß bei Auswahl der vierten Arbeitsweise des Hydraulikventils die Bewegung des Ventilelementes (31) die Spitze des Ventilkegels (41) veranlaßt, radial weiter nach außen entlang der im wesentlichen konischen Fläche des Ventilelementes (31) in eine Stellung zu rutschen, bei der der Steg (47) auf dem Ventilkegel (41) völlig von dem Ventilsitz (48) entfernt ist, wobei das Ventilelement (31) wiederum so eingestellt ist, daß das Fluid zu der Ausströmöffnung (37) fließen kann.

9. Mechanismus nach Anspruch 3, oder 4 und 3, oder einem der Ansprüche 5 bis 7, dadurch gekennzeichnet, daß das Hydraulikventil (2') ein Gehäuse (14') aufweist, mit einer Zulauföffnung (36'), die Druckflüssigkeit von der Pumpe erhält, mit einer Betriebsöffnung (38'), die mit dem Hydraulikzylinder verbunden ist, und mit einer Ausströmöffnung (37'), die mit dem Tank in Verbindung steht, wobei die Zulauföffnung (36') über eine erste Bohrung im Gehäuse mit einer Ventilkammer (40') innerhalb des Gehäuses und über eine zweite Bohrung (44') im Gehäuse mit der Ausströmöffnung (37') verbunden ist, wobei das Hydraulikventil ein Kegelventil (41') enthält, das zwischen der Ventilkammer (40') und der Betriebsöffnung (38') angeordnet ist, um den Fluß des Hydraulikfluids zu und von der Betriebsöffnung (38') zu steuern, wobei der begrenzte Durchlaß (95) in dem Gehäuse gebildet ist und die Ventilkammer (40') mit der Zulauföffnung (36') verbindet, wobei die Anordnung so getroffen ist, daß bei Auswahl der zweiten Arbeitsweise des Hydraulikventils ein oder das Ventilelement (31') des Hydraulikventils Hydraulikfluid von der Zulauföffnung (36') durch die zweite Bohrung (44') zur Ausströmöffnung (37') fließen läßt und das Kegelventil (41) geschlossen ist, so daß der Hydraulikzylinder abgeschlossen ist, daß bei Auswahl der ersten Arbeitsweise des Hydraulikventils (2') das Ventilelement (31') Fluid von der Zulauföffnung (36') über die erste Bohrung (43') zur Ventilkammer (40') fließen läßt und die zweite Bohrung (44') schließt, wodurch die Verbindung zwischen der Zulauf- (36') und der Ausströmöffnung (37') unterbrochen ist, so daß sich in der Ventilkammer (40') ein Druck aufbaut, der das Kegelventil (41') öffnet, daß bei Auswahl der vierten Arbeitsweise des Hydraulikventils das Ventilelement (31') den Ventilkegel (41') des Kegelventils so einstellt, daß das Kegelventil offengehalten wird und Hydraulikfluid aus der Ventilkammer (40') über die erste Bohrung (43'), die Zulauföffnung (36') und die zweite Bohrung (44') in die Ausströmöffnung entweichen kann, und daß bei Auswahl der dritten Arbeitsweise des Hydraulikventils das Ventilelement (31') auf den Ventilkegel (41') so einwirkt, daß das Kegelventil offengehalten wird und die erste Bohrung (43') schließt, so daß Hydraulikfluid aus der Ventilkammer (40') in die Zulauföffnung (36') nur über den begrenzten Durchlaß (95) entweichen kann, wobei das Ventilelement (31') dem Fluid ermöglicht, von der Zulauföffnung (36') über die zweite Bohrung (44') zur Ausströmöffnung (37') zu fließen.

10. Mechanismus nach Anspruch 4 oder 7, oder 8 oder 9 und 4 oder 7, dadurch gekennzeichnet, daß der erste Kolben (21) an einem Ende einer Kolbenstange befestigt ist, die zur Übertragung der Bewegung zwischen dem Kolben (21) und dem Ventilelement (31) an ihrem anderen Ende mit dem Ventilelement (31) verbunden ist, wobei der erste pneumatische Zylinder (5) mittels einer Ansatzhülse (35) an das Hydraulikventil (2) angebaut ist und das Ventilelement (31) in einem Lager (71) in der Ansatzhülse (35) gleitet.

**Revendications**

1. Un mécanisme pour manoeuvrer une partie relativement mobile d'un véhicule telle qu'une caisse basculante, comprenant un réservoir (4) de fluide hydraulique, une pompe (3) pour fournir le fluide du réservoir à un vérin hydraulique (1) pour mouvoir ladite partie du véhicule, une prise de force (8) engageable et dégageable pour coupler la pompe (3) à une source (6) de force motrice du véhicule de sorte que la pompe (3) soit entraînée au moyen de ladite source de force motrice (6), une valve hydraulique (2) commandant l'écoulement du fluide vers et depuis le vérin hydraulique (1) et ayant une première position pour laquelle le fluide est fourni par la pompe (3) au vérin hydraulique (1) et une seconde position pour laquelle le fluide est empêché de s'écouler vers et depuis le vérin hydraulique (1), la valve hydraulique (2) et l'engagement/dégagement de la prise de force (8) étant commandés par un moyen de commande manuelle commun (10) disposé de telle sorte que la prise de force (8) est engagée quand la valve hydraulique (2) est dans sa première ou sa seconde position, caractérisé en ce que la valve hydraulique (2) est commandée par un premier vérin pneumatique (5), l'engagement/dégagement de la prise de force (8) est commandé par un second vérin pneumatique (9), les deux vérins pneumatiques (5 et 9) étant sous le contrôle du moyen de commande manuelle commun lequel comprend un ensemble (10) de valves pneumatiques de commande, la valve hydraulique (2) a une troisième position permettant un écoulement restreint du vérin hydraulique (1) au réservoir (4) sous l'effet d'une force externe exercée sur le vérin hydraulique (1), et l'ensemble de valves de commande pneumatiques (10) est agencé de telle sorte que la prise de force (8) est engagée quand la valve hydraulique (2) est dans sa troisième position.

2. Un mécanisme selon la revendication 1, caractérisé en ce que la valve hydraulique (2) a une quatrième position permettant au fluide de s'écouler librement du vérin hydraulique (1) au réservoir (4) sous l'effet d'une force externe exercée sur le vérin hydraulique (1), et en ce que, lorsque l'ensemble de valves de commande pneumatiques (10) est disposé pour placer la valve hydraulique (2) dans sa quatrième position, il dégage aussi la prise de force (8).

3. Un mécanisme selon la revendication 1, caractérisé en ce que l'ensemble de valves de commande pneumatiques (10) peut être utilisé pour choisir un premier mode de fonctionnement de la valve hydraulique (2) dans lequel le fluide hydraulique peut s'écouler dans le vérin hydraulique (1) pour effectuer le mouvement de ladite partie du véhicule dans une direction, un second mode de fonctionnement de la valve hydraulique (2) dans lequel le vérin hydraulique (1) est isolé de sorte qu'aucun écoulement de fluide ne se produise vers ou depuis le vérin hydraulique (1), réalisant ainsi un maintien de ladite partie de véhicule dans une position donnée, un troisième mode de fonctionnement de la valve hydraulique (2), dans lequel le fluide peut seulement s'échapper du vérin hydraulique (1) par un passage restreint dans la valve hydraulique (2), d'où résulte un mouvement commandé de ladite partie de véhicule dans une direction différente, et un quatrième mode de fonctionnement de la valve hydraulique (2) dans lequel un passage est ouvert dans la valve hydraulique (2), par le moyen duquel le fluide peut s'échapper du vérin hydraulique (1) pour réaliser le mouvement de ladite partie de véhicule dans ladite direction différente, et en ce que l'ensemble de valves de commande pneumatiques (10) est agencé de telle sorte que, lorsque le premier, le second ou le troisième mode de fonctionnement de la valve hydraulique (2) est choisi, le second vérin pneumatique (9) est mis en action de façon à engager la prise de force (8) et lorsque le quatrième mode de fonctionnement est choisi, le second vérin pneumatique (9) est mis au repos de sorte que la prise de force (8) est dégagée.

4. Un mécanisme selon l'une des revendications 1 ou 3, caractérisé en ce que le premier vérin pneumatique (5) a un premier piston associé (21) fonctionnellement connecté à un élément de valve (31) dans la valve hydraulique (2) de sorte que le mouvement relatif du premier piston (21) et du premier vérin pneumatique (5) produise le mouvement de l'élément de valve (31).

5. Un mécanisme selon la revendication 3, caractérisé en ce que le premier vérin pneumatique (5) contient une première et une seconde paroi mobile (21 et 22), la position de la première paroi mobile (21) relativement au premier vérin pneumatique (5) déterminant le mode de fonctionnement de la valve hydraulique (2), les parois mobiles définissant une première, une seconde et une troisième chambre dans le premier vérin pneumatique, la seconde chambre (19) étant définie entre la première et la seconde paroi mobile (21 et 22), et la première et la troisième chambre (20 et 18) étant disposées aux extrémités opposées de la seconde chambre (19), adjacentes à la première et à la seconde paroi mobile (21 et 22) respectivement, le premier vérin pneumatique (5) étant agencé de façon à avoir un premier mode de fonctionnement dans lequel la seconde et la troisième chambre (19 et 18) sont alimentées en fluide pneumatique alors que la première chambre (20) est mise à l'atmosphère, de sorte que la première paroi mobile (21) est poussée par la pression du fluide dans une première direction s'écartant de la seconde paroi mobile (22) vers une première position extrême, un second mode de fonctionnement dans lequel la troisième chambre (18) est alimentée en fluide pneumatique et les pressions de fluide dans la première et la seconde chambre (20 et 19) sont égalisées, des moyens limiteurs de trajet (27) limitant le mouvement de la seconde paroi· mobile (22) dans ladite première direction, de sorte que la première paroi mobile (21) est maintenue dans une première position intermédiaire, un troisième mode de fonctionnement dans lequel la première et la troisième chambre (20 et 18) sont mises en pression et la seconde chambre (19) est évacuée, de sorte que la première paroi mobile (21) est poussée dans la seconde direction et la seconde paroi mobile (22) est poussée dans la première direction opposée par la pression du fluide, la seconde paroi mobile (22) agissant comme une butée pour la première paroi mobile (21) et maintenant la première paroi mobile (21) dans une seconde position intermédiaire, et un quatrième mode de fonctionnement dans lequel la première chambre (20) est mise en pression tandis que la seconde et la troisième chambre (19 et 18) sont évacuées, de sorte que la première paroi mobile (21) est poussée par la pression de fluide dans une seconde direction opposée à ladite première direction vers une seconde position extrême, le premier, le second, le troisième et le quatrième mode de fonctionnement du premier vérin pneumatique (5) correspondant respectivement au premier, second, troisième et quatrième mode de fonctionnement du vérin hydraulique (2), le fluide pneumatique étant fourni aux chambres (20, 19 et 18) ou évacué de ces chambres selon les besoins sous le contrôle de l'ensemble des valves de commande pneumatiques (10) à travers une première ouverture (26) dans la première chambre (20), une seconde ouverture (25) dans la seconde chambre (19) et une troisième ouverture (24) dans la troisième chambre (18), les première, seconde et troisième ouvertures (26, 25, 24) étant respectivement reliées à des premier, second et troisième orifices de commande (70) dans l'ensemble des valves de commande pneumatiques (10), le troisième orifice de commande étant aussi relié au second vérin pneumatique (9) de façon que lorsque l'un des premier, second ou troisième mode de fonctionnement est choisi et que le fluide pneumatique est fourni à la troisième chambre (18) à travers le troisième orifice de commande, le fluide pneumatique alimente aussi le second vérin pneumatique (9) de façon à engager la prise de force (8), mais quand le quatrième mode de fonctionnement est choisi et que la troisième chambre (18) est évacuée, le second vérin pneumatique (9) est aussi évacué en provoquant le dégagement de la prise de force (8).

6. Un mécanisme selon la revendication 5, caractérisé en ce que l'ensemble de valves de commande pneumatiques (10) est pourvu d'un levier manoeuvrable manuellement (50) qui dépasse d'une plaque de cames (59) portant six cames (60), les cames étant disposées sur la plaque de cames de telle sorte que, durant le trajet de la plaque de cames, chaque came agit respectivement sur l'un des six éléments de valve (62) ayant des sièges de valve respectifs (68), les éléments de valve (62) comprenant un premier élément de valve commandant l'alimentation de fluide pneumatique audit premier orifice de commande, un second élément de valve commandant l'alimentation de fluide pneumatique audit second orifice de commande, un troisième élément de valve commandant l'alimentation du fluide pneumatique audit troisième orifice de commande, un quatrième élément de valve commandant l'évacuation du fluide pneumatique par le premier orifice de commande, un cinquième élément de valve commandant l'évacuation de fluide pneumatique par le second orifice de commande et un sixième élément de valve commandant l'évacuation de fluide pneumatique par le troisième orifice de commande, des moyens de sollicitation (66) poussant chaque élément de valve (62) contre sa came respective (60) dans une direction tendant à déplacer l'élément de valve de son siège (68), et les cames (60) étant disposées sur la plaque de cames (59) de telle sorte que, selon le mode de fonctionnement choisi en utilisant le levier de manoeuvre manuelle (50), les éléments de valve (62) sont maintenus écartés de leurs sièges associés (68) sous l'action des moyens de sollicitation (66) ou maintenus contre leurs sièges (68) au moyen des cames (60) de façon appropriée, pour réaliser le système requis de connexions au premier, second ou troisième orifice de commande.

7. Un mécanisme selon l'une des revendications 5 ou 6, caractérisé en ce que la première paroi mobile comprend un premier piston (21) fonctionnellement connecté à un élément de valve (31) dans la valve hydraulique (2) de façon qu'un mouvement relatif entre le premier piston (21) et le cylindre du premier vérin pneumatique (5) produise le mouvement de l'élément de valve (31), la seconde paroi mobile comprenant un second piston (22).

8. Un mécanisme selon la revendication 3, ou la revendication 4 et la revendication 3, ou l'une des revendications 5 à 7, caractérisé en ce que la valve hydraulique a un carter (14) avec un passage d'alimentation (36) pour recevoir le fluide sous pression de la pompe (3), un passage de service (38) raccordé au vérin hydraulique (1) et un passage d'évacuation (37) communiquant avec le réservoir (4), un ou l'élément de valve (31) de la valve hydraulique ayant une surface généralement conique et la valve hydraulique comprenant aussi un clapet (41) coopérant avec un siège (42) à l'entrée du passage de service (38) pour commander l'écoulement du fluide hydraulique vers ou depuis le passage de service (38) à travers un trou (48) du siège (42), le clapet (41) ayant une saillie (47) généralement cylindrique avec une portion (47a) généralement tronconique adjacente à la saillie, la disposition étant telle que, lorsque le second mode de fonctionnement de la valve hydraulique (2) est choisi, l'élément de valve est disposé de sorte que le passage d'alimentation (36) est en communication avec le passage d'évacuation (37) et que le clapet (41) demeure en une position dans laquelle la saillie (47) reste à l'intérieur du trou (48) du siège (42), la partie adjacente tronconique venant en butée contre le siège pour fermer le trou (48) du siège, en fermant de ce fait le passage de service (38) de sorte que le vérin hydraulique (1) est isolé et, lorsque le premier mode de fonctionnement de la valve hydraulique (2) est choisi, l'élément de valve (31) coupe la communication entre le passage d'alimentation (36) et le passage d'évacuation (37), de sorte que la pression croît dans la valve hydraulique, repoussant le clapet (41) hors de son siège (42), mais quand le troisième mode de fonctionnement de la valve hydraulique est choisi, le mouvement de l'élément de valve (31) provoque le déplacement de l'extrémité du clapet (41) le long de la surface généralement conique de l'élément de valve (31) vers une position dans laquelle la portion (47a) généralement tronconique du clapet (41) est dégagée du siège (42) mais la saillie (47) reste dans le trou du siège (48), ménageant ainsi ledit passage restreint entre la saillie (47) et le trou du siège (48), l'élément de valve (31), étant disposé de façon à permettre l'échappement du fluide vers le passage d'évacuation (37), et lorsque le quatrième mode de fonctionnement de la valve hydraulique est choisi, le mouvement de l'élément de valve (31) provoque le déplacement radial de l'extrémité du clapet (41) plus loin vers l'extérieur, le long de la surface généralement conique de l'élément de valve (31), jusqu'à une position dans laquelle la saillie (47) sur le clapet (41) est complètement dégagée du siège (48), l'élément de valve (31) étant encore agencé de façon à permettre l'échappement du fluide vers le passage d'évacuation (37).

9. Un mécanisme selon la revendication 3, ou les revendications 4 et 3, ou l'une des revendications 5 à 7, caractérisé en ce que la valve hydraulique (2') a un boîtier (14') avec un passage d'alimentation (36') pour recevoir du fluide sous pression de la pompe, un passage de service (38') raccordé au vérin hydraulique et un passage d'évacuation (37') communiquant avec le réservoir, le passage d'alimentation (36') étant raccordé à une chambre de valve (40') dans le carter au moyen d'un premier orifice dans le carter et étant raccordé au passage d'évacuation (37') au moyen d'un second orifice (44') dans le carter, la valve hydraulique incorporant une valve à clapet (41') disposée entre la chambre de valve (40') et le passage de service (38') pour commander l'écoulement du fluide hydraulique vers et depuis le passage de service (38'), ledit passage restreint (95) étant formé dans le boîtier et raccordant la chambre de valve (40') au passage d'alimentation (36'), la disposition étant telle que, lorsque le second mode de fonctionnement de la valve hydraulique est choisi, un ou l'élément de valve (31') de la valve hydraulique permet au fluide hydraulique de s'écouler du passage d'alimentation (36') à travers le second orifice (44') dans le passage d'évacuation (37'), et la valve à clapet (41') est fermée de sorte que le vérin hydraulique est isolé lorsque le premier mode de fonctionnement de la valve hydraulique (2') est choisi, l'élément de valve (31') permet au fluide de s'écouler du passage d'alimentation (36') à la chambre de valve (40') à travers le premier orifice (43') et ferme le second orifice (44'), coupant ainsi la communication entre le passage d'alimentation (36') et le passage d'évacuation (37'), de sorte que la pression croît dans la chambre de valve (40') en ouvrant la valve à clapet (41'), quand le quatrième mode de fonctionnement de la valve hydraulique est choisi, l'élément de valve (31') engage le clapet (41') de la valve à clapet de façon à maintenir la valve à clapet ouverte et à permettre au fluide hydraulique de s'échapper de la chambre de valve (40') à travers le premier orifice (43'), le passage d'alimentation (36') et le second orifice (44') vers le passage d'évacuation, et lorsque le troisième mode de fonctionnement de la valeur hydraulique est choisi, l'élément de valve (31') engage le clapet (41') de façon à maintenir la valve à clapet ouverte et fermer le premier orifice (43'), de sorte que le fluide hydraulique peut seulement s'échapper de la chambre de valve (40') vers le passage d'alimentation (36') à travers le passage restreint (95), l'élément de valve (31') permettant au fluide de s'écouler du passage d'alimentation (36') au passage d'évacuation (37') à travers le second orifice (44').

10. Un mécanisme selon la revendication 4 ou 7, ou la revendication 8 ou 9 et la revendication 4 ou 7, caractérisé en ce que le premier piston (21) est porté à l'une des extrémités d'une tige de piston qui est reliée à son autre extrémité à l'élément de valve (31) pour la transmission du mouvement entre le piston (21) et l'élément de valve (31), le premier vérin pneumatique (5) étant relié à la valve hydraulique (2) au moyen d'un boîtier de fixation (35), et l'élément de valve (31) glissant dans un palier (71) du boîtier de fixation (35).

FIG.1.

FIG. 2.

FIG. 3.

0 125 926

RAISE

HOLD

SLOW LOWER

FAST LOWER

IN

PTO
OUT

53

53

51

53

59

53

52

50

FIG. 4.

FIG. 5.

**FIG. 6.**

**FIG. 7.**

5

FIG. 8.

FIG. 9.

FIG. 10.

FIG. 11.

0 125 926

FIG.12.

FIG.13.

FIG.15

FIG.14.

FIG. 16.